# EUROPÄISCHE PATENTSCHRIFT

(11) **EP 0 544 736 B1**
(45) Veröffentlichungstag und Bekanntmachung des Hinweises auf die Patenterteilung: **19.10.1994**
(21) Anmeldenummer: 91914843.7
(22) Anmeldetag: 19.08.1991
(51) Int. Cl.: B60T 8/32

(54) **ANORDNUNG ELEKTRONISCHER TEILE FÜR EIN ANTIBLOCKIERSYSTEM EINES FAHRZEUGES**
ARRANGEMENT OF ELECTRONIC COMPONENTS FOR A VEHICLE ANTI-LOCKING SYSTEM
AGENCEMENT D'ELEMENTS ELECTRONIQUES POUR UN SYSTEME D'ANTIBLOCAGE D'UN VEHICULE

(30) Priorität: 27.08.1990 DE 9012296 U
(43) Veröffentlichungstag der Anmeldung: 09.06.1993
(73) Patentinhaber: SIEMENS AKTIENGESELLSCHAFT, 80333 München (DE)
(72) Erfinder: HIEBL, Johann, D-8494 Waldmünchen (DE)
(86) Internationale Anmeldenummer: DE9100656
(87) Internationale Veröffentlichungsnummer: WO9203316

(56) Entgegenhaltungen:
- EP-A- 0 294 803
- DE-A- 3 226 074
- FR-A- 2 250 098
- US-A- 3 466 097
- JOURNAL OF ELECTRONIC ENGINEERING No. 133; January 1978, TOKIO pages 54-57

## Beschreibung

Die Erfindung betrifft eine Schaltungsanordnung nach dem Oberbegriff von Patentanspruch 1.

Eine bekannte derartige Schaltungsanordnung (FR-A 2 250 098) betrifft ein Antiblockiersystem für Kraftfahrzeuge. Sie weist unter anderem einen Bild-Korrelator auf, bei dem von einer Lichtquelle ausgesendete Strahlen auf die Fahrbann geworfen werden und die reflektierten Strahlen über ein Beugungsgitter zu zwei fotoelektrischen Empfängern gelangen. Bei bewegtem Fahrzeug haben die Ausgangssignale dieser Empfänger eine Frequenzkomponente, die ausgewertet wird. Die Auswertung führt dazu, daß bei einer Fahrzeuggeschwindigkeit, die bei einem plötzlichen Bremsen zu einem Blockieren der Räder und damit zu einem Rutschen des Fahrzeugs führen würde, die Bremsen des Fahrzeugs automatisch betätigt werden und außerdem wahlweise ein entsprechender Warnhinweis für den Fahrer aktiviert wird.

Übliche Antiblockiersysteme hingegen erkennen den Beginn des Blockierens eines Rades daran, daß sich die Drehzahlen verschiedener Räder in typischer Weise voneinander unterscheiden. Eine Schwierigkeit einer derartigen Schaltungsanordnung besteht aber darin, daß sie auch dann erkennen muß, daß alle Räder gleichzeitig blockieren, wenn das Fahrzeug noch nicht in Ruhe ist, wenn es also über den Untergrund mit blockierenden Rädern rutscht.

Die Erfindung wurde zwar zunächst für das Antiblockiersystem eines KFZ entwickelt. Es zeigte sich aber, daß es darüber hinaus auch für Antiblockiersysteme anderer Fahrzeuge, z.B. auch für LKWs, im Prinzip sogar für Flugzeuge geeignet ist.

Normalerweise erkennen solche Anordnungen den Beginn des Blockierens eines Rades daran, daß sich die Drehzahlen der verschiedenen Räder in typischer Weise voneinander unterscheiden. Eine Schwierigkeit derartiger Anordnungen besteht aber oft darin, daß sie automatisch erkennen sollen, ob gleichzeitig alle Räder blockieren, obwohl das Fahrzeug noch nicht in Ruhe ist, also noch rutscht.

Die Aufgabe,
- bei einem Blockieren aller Räder automatisch zu erkennen, daß das Fahrzeug noch rutscht,
wird erfindungsgemäß durch den im Patentanspruch 1 definierten Gegenstand gelöst.

Die in den Unteransprüchen definierten Gegenstände gestatten, zusätzliche Vorteile zu erreichen. U.a. gestatten nämlich die zusätzlichen Maßnahmen gemäß dem Patentanspruch
2, mit besonders wenig Aufwand auch die Geschwindigkeit abschätzen zu können, mit welcher das Fahrzeug beim Blockieren seiner Räder rutscht,
3, mit wenig Aufwand noch erheblich genauer die Geschwindigkeit abschätzen zu können, mit welcher das Fahrzeug in jene Richtung rutscht, in der die beiden Bodenabstandssensoren hintereinander am Fahrzeugboden angebracht sind,
4, mit besonders wenig Aufwand die Anordnung herstellen und betreiben zu können,
5, besonders zuverlässig betreibbare Ultraschallquellen sowie solche, mit besonders wenig Aufwand herstellbare Ultraschallsensoren verwenden zu können, die selbst nicht zusätzlich - z.B. nach dem Radarprinzip - Ultraschall abstrahlen, sowie
6, mit besonders wenig Aufwand die Anordnung herzustellen und zu betreiben.

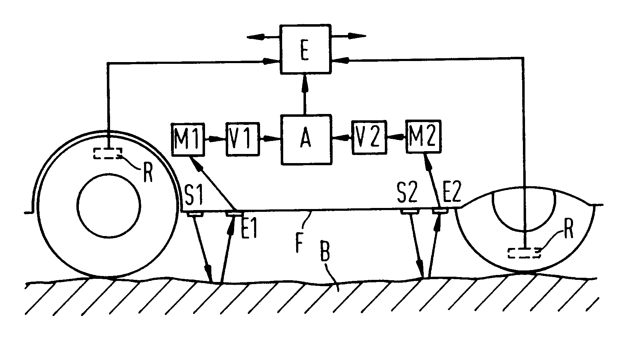

Die Erfindung und Weiterbildungen derselben werden anhand des in der Figur gezeigten Ausführungsbeispiels weiter erläutert. Dieses Beispiel zeigt der Übersichtlichkeit wegen nur das Prinzip der Erfindung; dementsprechend ist es hier möglichst einfach dargestellt. Dem Fachmanne ist aber verständlich, daß seine einzelnen Teile für sich auch einen sehr komplizierten Aufbau aufweisen können.

Diese Figur zeigt also ein Beispiel der erfindungsgemäßen Anordnung von elektronischen Teilen für ein Antiblockiersystem eines KFZ. Es enthält, in für die meisten Antiblockiersysteme typischer Weise, elektronische Radsensoren R, welche während des Bremsens das Drehverhalten der Räder und / oder der Achsen des KFZ überwachen. Die elektronisch von den Radsensoren R gesteuerte Steuereinheit E wirkt ihrerseits im Blockierfall unterschiedlich auf die Räder des KFZ, und zwar je nach deren Blockierzustand, so ein, daß diese Räder optimal bremsen ohne zu blockieren.

Normalerweise erkennen solche Anordnungen den Beginn des Blockierens eines Rades daran, daß sich die Drehzahlen der verschiedenen Räder in typischer Weise voneinander unterscheiden. Wie bereits erwähnt, besteht aber eine Schwierigkeit derartiger Anordnungen mitunter darin, daß sie automatisch erkennen sollen, ob gleichzeitig alle Räder blockieren, also daß das Fahrzeug noch nicht in Ruhe ist, sondern noch rutscht.

Die Erfindung nutzt daher die Abtastung der Bodenstrukturen bzw. Bodenunebenheiten mit hoher Genauigkeit mittels mindestens einem - bei dem in der Figur gezeigten Beispiel sind es zwei - Bodenabstandssensoren, um bei ruhenden Rädern aus dem fluktuierenden, vom Bodenabstandssensor empfangenen Signal auf das Rutschen des Fahrzeuges schließen zu können. Die Erfindung nutzt also die Messung der kleinsten - und evtl. auch der gröberen - Bodenunebenheiten, also der Mikrostruktur und / oder der Makrostruktur der Bodenoberfläche unter dem KFZ, um zu erkennen, ob das Fahrzeug schon ruht oder noch rutscht.

Die gezeigte Anordnung enthält daher - unabhängig von den das Raddrehverhalten erkennenden Radsensoren R - zwei Bodenabstandssensoren E1, E2, welche so hintereinander nahe dem oder am Fahrzeugboden F angebracht sind und deren Richtcharakteristiken so gegen den Boden B orientiert sind, daß der zweite Bodenabstandssensor E2 den Bodenabstand im Regelfall - vor allem beim Geradeausrutschen - dort mißt, wo zuvor der erste Bodenabstandssensor E1 den Bodenabstand maß.

Die Erfindung gestattet, bei Fahrzeugen, die schon aus anderen Gründen einen oder mehrere solche Bodenabstandssensoren E1, E2 aufweisen, diese Bodenabstandssensoren auch für die Erfindung mitauszunutzen. Bei der Erfindung kann man also auch Bodenabstandssensoren E1, E1 mitausnutzen, wenn diese an sich z.B. auch zur elektronischen Regelung der Fahrzeugfederung und / oder der Dämpfung dienen.

Schon aus der fluktuierenden Unruhe der Amplitude und / oder der Frequenz des einzelnen Signals, das jeder einzelne Bodenabstandssensor E1, E2 für sich empfängt, kann die Auswerteeinheit A erkennen, daß das Fahrzeug noch rutscht.

Im Prinzip genügt es also schon, nur einen einzigen Bodenabstandssensor E1 zu verwenden, um das Rutschen beim blockierenden Rädern zu erkennen. Diese erfindungsgemäße Benutzung selbst nur eines einzigen Bodenabstandssensors E1 gestattet überdies bereits, zusätzlich zumindest grob auch die Geschwindigkeit abzuschätzen, mit welcher das Fahrzeug rutscht : Dazu kann man nämlich unter Berücksichtigung des Dopplereffektes die Bandbreite des vom Bodenabstandssensors empfangenen Signales auswerten, oder mit der Bandbreite korrelierende Werte auswerten. Man kann also z.B. auch die Amplitude des empfangenen Signales bei einer zweiten Frequenz messen, bezogen auf die Amplitude bei einer definierten mittleren ersten Frequenz innerhalb des empfangenen Frequenzspektrums. Besonders genau kann man hierbei den Dopplereffekt dann berücksichtigen, wenn zusätzlich mindestens ein einziger, die Fahrbahn B, also den Boden B, mit einer konstanten Frequenz beschallender Ultraschallsender S1 und / oder S2 angebracht wird, um mittels der Auswerteeinheit A zumindest grob die durch den Dopplereffekt verursachten Frequenzänderungen zu erfassen.

Man kann aber zur Erhöhung der Genauigkeit, mit welcher die Rutschgeschwindigkeit gemessen wird, vgl. die Figur, auch mindestens zwei Bodenabstandssensoren E1, E2 so hintereinander nahe dem oder am Fahrzeugboden F anbringen und ihre Richtcharakteristiken so gegen den Boden B hin orientieren, daß der zweite Bodenabstandssensor E2 den Bodenabstand beim Rutschen in Geradeausrichtung im Regelfall dort mißt, wo zuvor der erste Bodenabstandssensor E1 den Bodenabstand maß :

Die empfangenen Signale der beiden Bodenabstandssensoren E1, E2 werden dann zusätzlich in der Auswerteeinheit A miteinander verglichen, um zu erkennen, ob der zweite Bodenabstandssensor E2 - wenn auch zeitlich verzögert - dieselben Bodenunebenheiten mißt wie zuvor der erste Bodenabstandssensor E1. Aus der Größe der zeitlichen Verzögerung der Messung derselben Struktur im ersten und dann im zweiten Bodenabstandssensor erhält die Auswerteeinheit die absolute Rutschgeschwindigkeit des KFZ zumindest angenähert, jedenfalls solange das KFZ in dieselbe Richtung (vorwärts oder rückwärts) rutscht, wie die betreffenden Bodenabstandssensoren E1, E2 am Fahrzeugboden F angebracht sind. Wenn in diesem Falle beide Bodenabstandssensoren E1, E2 fluktuierende Signale, also wechselnde Bodenunebenheiten messen, ohne daß von der Auswerteeinheit A durch zeitliche Verzögerung von einem der empfangenen Signale eine Übereinstimmung der gemessenen Boden(mikro)strukturen gefunden werden kann, dann rutscht das KFZ eben mehr oder weniger seitlich weg statt in jener Richtung, in welcher diese Sensoren E1, E1 am Fahrzeugboden F befestigt sind. Ob und inwieweit die von den beiden Bodenabstandssensoren E1, E2 gemessenen Bojenunebenheiten einander gleichen oder nicht gleichen, wird also von der Auswerteeinheit A erkannt.

Das in der Figur gezeigte Beispiel gestattet, die Rutschgeschwindigkeit des Fahrzeuges im Regelfall besonders genau zu messen : Die von den beiden Bodenabstandssensoren E1, E2 gleichzeitig (!) gemessenen Bodenunebenheiten sind nämlich de facto nie identisch, wenn nur die Meßgenauigkeit für die Erkennung der Bodenstruktur durch die Bodenabstandssensoren groß genug ist. Es ist nämlich noch die durch die Rutschgeschwindigkeit bewirkte Zeitverzögerung zwischen den empfangenen Signalen zu beachten.

Die Erfindung weist daher zusätzlich mindestens eine Speichereinheit - vgl. im gezeigten Beispiel die beiden Speichereinheiten M1 und M2 - auf, sowie die Verzögerungseinstelleinheiten V1, V2, deren Verzögerung z.B. durch die Auswerteeinhei A geregelt werden kann. Diese Speichereinheiten M1, M2 können auch zusammen mit der Auswerteeinheit A - auch zusammen mit den Verzögerungseinstelleinheiten V1, V2, auch zusammen mit den zugeordneten Bodenabstandssensoren E1, E2 - ein gemeinsames Gehäuse aufweisen; es können also diese Speichereinheiten M1, M2 also z.B. auch innerhalb der Auswerteeinheit A angebracht sein.

Diese Speichereinheiten M1, M2 stellen z.B. zumindest Schaltungsteile, z.B. ein RC-Glied, dar, welche zumindest das Ansteigen oder Abfallen der Amplitude und / oder der Frequenz der empfangenen Signale erkennen lassen. Diese Speichereinheiten M1, M2 können aber auch z.B. einen RAM-Speicher oder schieberegisterartige Speicher darstellen, welche jeweils für kurze Zeit das vom zugeordneten Bodenabstandssensor E1 bzw. E2 jeweils empfangene Signal speichern, also das vom ersten Bodenabstandssensor E1 bzw. zweiten Bodenabstandssensor E2 jeweils empfangene Signal, jeweils für eine kurze Zeit speichern, z.B. für wenige Sekunden bzw. für Bruchteile von einer Sekunde.

Außerdem enthält das gezeigte Beispiel Verzögerungseinstelleinheiten V1 und V2, welche den beiden Speichereinheiten M1 und M2 zugeordnet sind. Diese Verzögerungseinstelleinheiten V1, V2 gestatten, die in den Speichereinheiten M1 und M2 gespeicherten Signalfolgen mit einstellbarer, variabler Verzögerung in der Auswerteeinheit A zu vergleichen. Diese Verzögerungseinstelleinheiten V1 und V2 können z.B. auch durch eine Software realisiert sein, wenn die Auswerteeinheit A im wesentlichen durch einen Rechner A gebildet wird, welcher die Speichereinheiten M1, M1 mitenthält. Die Auswerteeinheit A vergleicht also nicht unmittelbar die von den Bodenabstandssensoren E1, E2 empfangenen Signale, sondern Signale, von denen mindestens eines für kurze, überdies variable Zeit verzögert werden kann.

Wenn die Auswerteeinheit mittels der Verzögerungseinstelleinheiten V1, V2 eine bestimmte Verzögerung für die Verzögerungseinstelleinheit V1 bzw. V2 feststellen kann, bei welcher eine weitgehende Identität der von den Bodenabstandssensoren E1, E2 zeitlich hintereinander empfangenen Signalen gegeben ist, dann ist das ein Kriterium dafür, daß das Fahrzeug in Geradeausrichtung rutscht - noch präziser formuliert : in jene Richtung rutscht, in welcher die beiden Bodenabstandssensoren E1, E2 hintereinander am Fahrzeugboden F befestigt sind. Überdies erkennt die Auswerteeinheit A an der Größe der eingestellten Verzögerung, wie schnell derzeit das Fahrzeug rutscht. Die Erfindung gestattet also in diesem Fall sogar eine ziemlich genaue Absolutmessung der Rutschgeschwindigkeit bei blockierenden Rädern.

Um bei einem Blockieren aller Räder automatisch zu erkennen, daß das Fahrzeug noch rutscht, vergleicht also die Auswerteeinheit A bei diesem Beispiel das vom ersten Bodenabstandssensor E1 empfangene Signal mit dem vom zweiten Bodenabstandssensor E2 bevorzugt mittels einer Verzögerungseinstelleinheit V1 bzw. V2 und mittels einer Speichereinheit M1 bzw. M2, um die der Fahrzeuggeschwindigkeit entsprechende zeitliche Verschiebung der empfangenen Signale zu erkennen.

Weil das Fahrzeug aber sowohl in Vorwärtsrichtung als auch in Rückwärtsrichtung rutschen kann, ist bei dem gezeigten Beispiel jedem der beiden Bodenabstandssensoren E1, E2 eine eigene Speichereinheit M1, M2 und eine eigene Verzögerungseinstelleinheit V1, V2 zugeordnet.

Man kann mit besonders wenig Aufwand die Anordnung herstellen und betreiben, wenn man als Bodenabstandssensoren E1, E2 Ultraschall empfangende Sensoren benutzt.

Oft erzeugt das Fahrzeug, z.B. dessen Motor, bereits einen ausreichend starken Ultraschall, welcher vom Boden B reflektiert und danach von den beiden Bodenabstandssensoren E1, E2 empfangen wird. Man kann aber auch bei Fehlen von Ultraschall-Motorgeräuschen bzw. -Fahrzeuggeräuschen die mit besonders wenig Aufwand herstellbaren Ultraschallsensoren E1, E2 verwenden, - auch dann wenn diese Ultraschallsensoren E1, E2 selber nicht zusätzlich, z.B. nach dem Radarprinzip, Ultraschall abstrahlen : Dann kann man nämlich, ebenfalls mit sehr wenig Aufwand, zusätzlich am oder nahe am Fahrzeugboden F mindestens einen einzigen, die Fahrbahn beschallenden Ultraschallsender, vgl. S1 und S2, - bevorzugt nahe bei den Ultraschallsensoren E1, E2 - so anbringen, daß seine Abstrahlrichtcharakteristik (jeweils) gegen den Boden B gerichtet ist. Besonders günstig ist es, zwei Ultraschallsender S1, S2 anzubringen und deren Abstrahlrichtcharakteristiken so gegen den Boden B zu richten, daß im Normalfall, also bei ebenem Boden B, maximal viel Schallenergie in die zugeordneten Bodenabstandssensoren E1, E2 gestrahlt wird.

## Patentansprüche

1. Schaltungsanordung für ein Antiblockiersystem für Kraftfahrzeuge, die aufweist:
- elektronische Radsensoren (R), die während des Bremsens das Drehverhalten der Räder des kraftfahrzeugs überwachen,
- eine die Signale der Radsensoren (R) auswertende Steuereinheit (E), die zur Vermeidung eines Blockierfalls auf die Räder einwirkt,
- ein nahe oder an dem Fahrzeugboden angebrachter und gegen die Fahrbahnoberfläche gerichteter Abstandssensor, der aus einem Strahlungssender (S1) und einem Strahlungsempfänger (E1) besteht,
- eine Speichereinheit (M1), die von dem Abstandssensor empfangenene Signale kurzzeitig speichert, und
- eine Auswerteeinheit (A), durch die die gespeicherten Signale des Abstandssensors auf Änderungen überprüft werden, die eine Bewegung des Kraftfahrzeugs anzeigen,
**dadurch gekennzeichnet,**
- daß ein zweiter Abstandssensor (S2, E2) derart nahe oder an dem Fahrzeugboden angebracht und gegen die Fahrbahnoberfläche gerichtet ist, daß er die von der Fahrbahnoberfläche reflektierten Signale an der Stelle empfängt, an der bei einer Geradeausbewegung des Kraftfahrzeugs der erste Abstandssensor die reflektierten Signale zuvor empfangen hatte,
- daß mindestens eine einstellbare Verzögerungseinheit (V1) mit der Auswerteeinheit (A) verbunden ist, und
- daß von der Auswerteeinheit (A) das von dem ersten Abstandssensor empfangene und gespeicherte Signal nach der eingestellten Verzögerungszeit mit dem von dem zweiten Abstandssensor empfangenen Signal verglichen und bei Übereinstimmung der verglichenen Signale ein Steuersignal an die Steuereinheit (E) gesendet wird, welches ein Rutschen des Kraftfahrzeugs anzeigt.

2. Schaltungsanordnung nach Anspruch 1, dadurch gekennzeichnet, daß der Abstandssensor mindestens einen die Fahrbahnoberfläche (B) mit einer konstanten Frequenz beschallenden Ultraschallsender aufweist.

3. Schaltungsanordnung nach Anspruch 1, dadurch gekennzeichnet, daß zumindest die Auswerteeinheit (A) und die Speichereinheit (M1) in einem Rechner enthalten sind.

## Claims

1. Circuit arrangement for an anti-lock braking system for motor vehicles, which has:
- electronic wheel sensors (R) which monitor the rotation behaviour of the wheels of the motor vehicle during braking,
- a control unit (E) which evaluates the signals of the wheel sensors (R) and which acts on the wheels to prevent a case of blocking,
- a clearance sensor, which is fitted close to or on the vehicle floor and is directed towards the road surface, and which comprises a radiation transmitter (S1) and a radiation receiver (E1),
- a memory unit (M1) which briefly stores signals received from the clearance sensor, and
- an evaluation unit (A), by means of which the stored signals of the clearance sensor are checked for changes which indicate a movement of the vehicle,
characterized
- in that a second clearance sensor (S2, E2) is fitted close to or on the vehicle floor, and is directed towards the road surface, in such a manner that it receives the signals reflected from the road surface at the point at which the first clearance sensor has previously received the reflected signals in the case of a straight-ahead movement of the motor vehicle,
- in that at least one adjustable delay unit (V1) is connected to the evaluation unit (A), and
- in that the signal which is received from the first clearance sensor and is stored is compared by the evaluation unit (A), after the adjusted delay time, with the signal received from the second clearance sensor, and, if the compared signals correspond, a control signal is transmitted to the control unit (E), which signal indicates that the motor vehicle is skidding.

2. Circuit arrangement according to Claim 1, characterized in that the clearance sensor has at least one ultrasound transmitter which ensonifies the road surface (B) at a constant frequency.

3. Circuit arrangement according to Claim 1, characterized in that at least the evaluation unit (A) and the memory unit (M1) are contained in a computer.

## Revendications

1. Montage pour un système d'antiblocage pour véhicules automobiles, qui comporte :
- des capteurs électroniques de roues (R), qui, pendant le freinage, contrôlent le comportement de rotation des roues du véhicule automobile,
- une unité de commande (E), qui évalue les signaux des capteurs de roues (T) et agit de manière à éviter un cas de blocage au niveau des roues,
- un capteur de distance, disposé à proximité ou sur le plancher du véhicule et dirigé vers la surface de la chaussée et qui est constitué par un émetteur de rayonnement (S1) et un récepteur de rayonnement (E1),
- une unité de mémoire (M1), qui mémorise pendant un bref intervalle de temps les signaux reçus du capteur de distance, et
- une unité d'évaluation (A), qui contrôle des variations éventuelles des signaux mémorisés du capteur de distance, indiquant un déplacement du véhicule automobile,
caractérisé par le fait
- qu'un second capteur de distance (S2, E2) est disposé à proximité ou sur le plancher du véhicule et est dirigé vers la surface de la chaussée de telle sorte qu'il reçoit les signaux, qui sont réfléchis par la surface de la chaussée, à l'emplacement où, dans le cas d'un déplacement rectiligne du véhicule automobile, le premier capteur de distance avait reçu auparavant les signaux réfléchis,
- qu'au moins une unité de retardement réglable (V) est reliée à l'unité d'évaluation (A), et
- que le signal reçu de la part du premier capteur de distance et mémorisé et comparé par l'unité d'évaluation (A), après le retard réglé, au signal reçu par le second capteur de distance, et, en cas de coïncidence des signaux comparés, un signal de commande, qui indique un dérapage du véhicule automobile, est envoyé à l'unité de commande (E).

2. Montage suivant la revendication 1, caractérisé par le fait que le capteur de distance possède au moins un émetteur d'ultrasons, qui irradie la surface (B) de la chaussée avec une fréquence constante.

3. Montage suivant la revendication 1, caractérisé par le fait qu'au moins l'unité d'évaluation (A) et l'unité de mémoire (M1) sont contenues dans un ordinateur.
